Europäisches Patentamt

European Patent Office

Office européen des brevets

(11) Numéro de publication: **0 156 725**
**A1**

## (12) DEMANDE DE BREVET EUROPEEN

(21) Numéro de dépôt: 85400507.1

(22) Date de dépôt: 15.03.85

(51) Int. Cl.⁴: **G 06 K 7/10**

(30) Priorité: 20.03.84 FR 8404284

(43) Date de publication de la demande:
02.10.85 Bulletin 85/40

(84) Etats contractants désignés:
DE GB IT

(71) Demandeur: SOCIETE D'ELECTRONIQUE DE LA REGION
PAYS de LOIRE - SEREL
74, rue du Surmelin
F-75020 Paris(FR)

(72) Inventeur: Jollivet, Alain
THOMSON-CSF SCPI 173, bld Haussmann
F-75379 Paris Cedex 08(FR)

(74) Mandataire: Chaverneff, Vladimir et al,
THOMSON-CSF SCPI 173, Bld Haussmann
F-75379 Paris Cedex 08(FR)

(54) **Lecteur optique fonctionnant en lecteur d'écran télévision et en lecteur de code à barres.**

(57) Le lecteur optique de l'invention comporte un photo-récepteur unique (1), deux voies de traitement respectivement pour la fonction crayon optique (13), et pour la fonction lecteur de code à barres (14), un amplificateur d'entrée commun aux deux voies (12), un circuit de mise en forme commun (20), les deux voies comportant respectivement un filtre passe-haut (15) suivi d'un adaptateur d'impédance (16), et un filtre passe-bas (17) suivi d'un amplificateur (18) et d'un adaptateur d'impédance (19), les sorties de deux voies étant reliées à une porte OU.

Application: microinformatique individuelle.

FIG_2

1

## LECTEUR OPTIQUE FONCTIONNANT EN LECTEUR
## D'ECRAN TELEVISION ET EN LECTEUR DE CODE A BARRES

La présente invention se rapporte à un lecteur optique fonctionnant en lecteur d'écran télévision et en lecteur de code à barres.

La lecture d'un code à barres est réalisée généralement par des capteurs optoélectroniques comprenant un dispositif d'émission dans l'infrarouge (diode électro-luminescente) et un dispositif de réception qui peut être un phototransistor, et une photodiode, etc... La vitesse de lecture est généralement comprise entre 7 cm/s et 70 cm/s, ce qui donne une fréquence de fonctionnement de 100 Hz à 1 kHz. L'énergie reçue par le dispositif de réception est égale au produit de l'énergie émise par le dispositif d'émission et du coefficient de transmission ou de réflexion du support de code à barres. La mise en forme des signaux reçus est généralement réalisée par un détecteur de crête qui permet de suivre les variations dûes à la non uniformité du support de code à barres.

Un lecteur d'écran de télévision, plus généralement connu sous le nom anglais de "light pen", est constitué habituellement d'un capteur optoélectronique comprenant uniquement un récepteur, par exemple à phototransistor ou à photodiode. Ce capteur doit être suffisamment sensible dans le spectre visible pour détecter le passage du spot sur l'écran. La fréquence de passage du spot sur l'écran est en l'occurrence la fréquence de balayage ligne, c'est-à-dire 15,625 kHz pour le standard français. La rapidité de fonctionnement du lecteur est un paramètre important du fait que le temps écoulé entre le début du balayage d'une ligne horizontale de l'écran et l'instant de passage du spot devant le lecteur détermine la position de ce lecteur sur ladite ligne horizontale. Les signaux que reçoit le capteur, et dont l'amplitude dépend du réglage des commandes de lumière du tube cathodique, sont mis en forme par un circuit effectuant une comparaison du signal provenant du capteur avec une tension de référence suffisamment faible pour éviter le retard dû à la pente de ces signaux.

La présente invention a pour objet un dispositif lecteur optique à capteur unique réalisant les deux fonctions précitées, ce dispositif comportant une sortie unique et assurant la commutation automatique entre les deux fonctions.

Le lecteur optique conforme à la présente invention comporte, à la sortie d'un transducteur à photorécepteur unique, un circuit de traitement à deux voies, une voie pour la fonction crayon optique, et une voie pour la fonction lecteur de code à barres, ces voies comportant respectivement un filtre passe-haut et un filtre passe-bas, ces deux voies étant reliées à une porte OU dont la sortie est reliée à la sortie du dispositif lecteur, ce circuit de traitement comportant en outre des amplificateurs et des circuits de mise en forme.

Selon un premier mode de réalisation de l'invention, la première voie de traitement comporte un amplificateur suivi d'un filtre passe-haut et d'un circuit de mise en forme, et la seconde voie comporte un amplificateur suivi d'un filtre passe-bas et d'un circuit de mise en forme.

Selon un deuxième mode de réalisation de l'invention, qui est le mode de réalisation préféré, le circuit de traitement comporte, en amont des deux voies de traitement, un amplificateur commun, et la première voie de traitement comporte un filtre passe-haut suivi d'un adaptateur d'impédance, tandis que la deuxième voie de traitement comporte un filtre passe-bas suivi d'un amplificateur, un circuit de mise en forme commun étant disposé en aval de la porte à fonction OU.

La présente invention sera mieux comprise à l'aide de la description détaillée de deux modes de réalisation pris comme exemples non limitatif et illustrés par le dessin annexé pour lequel :

- la figure 1 est un bloc diagramme d'un premier mode de réalisation d'un lecteur optique conforme à l'invention ;

- la figure 2 est un bloc diagramme du mode de réalisation préféré de l'invention, et

- la figure 3 est schéma détaillé dudit mode de réalisation préféré de l'invention.

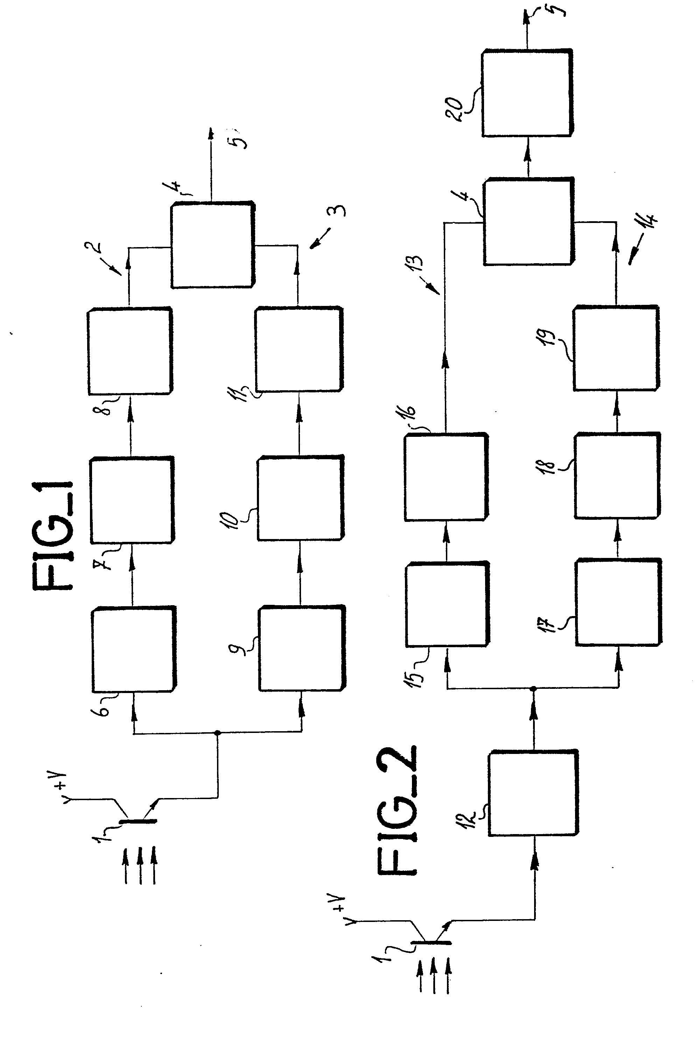

Le dispositif lecteur, dont le premier mode de réalisation est schématiquement représenté sur la figure 1, comporte un photorécepteur 1, constitué par un phototransistor ou une photodiode, alimenté une tension +V. La sortie du photorécepteur 1 est reliée à une première voie de traitement 2 assurant le traitement des signaux pour l'utilisation en crayon optique du dispositif lecteur, et à une seconde voie de traitement 3 assurant le traitement des signaux lorsque le dispositif lecteur est utilisé en lecteur de code à barres. Les sorties des voies 2 et 3 sont reliées à une porte à fonction OU référencée 4 dont la sortie est reliée à une borne 5 constituant la sortie du dispositif lecteur.

La voie de traitement 2 comporte successivement un amplificateur 6, un filtre passe-haut 7, et un circuit de mise en forme 8. La voie de traitement 3 comporte successivement un amplificateur 9, un filtre passe-bas 10, et un circuit de mise en forme 11.

Comme précisé ci-dessus, les signaux à exploiter en fonction crayon optique ont une fréquence beaucoup plus élevée que celle des signaux à exploiter en fonction lecteur de code à barres, et par conséquent, leur discrimination s'effectue simplement à l'aide d'un filtre passe-haut et d'un filtre passe-bas respectivement. Les circuits de mise en forme 8 et 11 élaborent, de façon connue en soi, des signaux logiques de même amplitude pour l'exploitation par les circuits branchés en aval de la borne 5. Les caractéristiques des amplificateurs 6 et 9 et des circuits de mise en forme 8 et 11 sont telles que lorsque l'une des deux voies de traitement 2 ou 3 traite un signal correspondant, le signal de sortie de l'autre voie a un niveau logique "0" afin, bien entendu, qu'il n'y ait à la sortie de la porte 4 qu'un seul signal utile.

Le mode de réalisation du lecteur conforme à l'invention représenté sur la figure 2 comporte, à la sortie du photorécepteur 1, un amplificateur 12, commun aux deux voies de traitement 13 et 14 assurant respectivement la fonction crayon optique et la fonction lecteur de code à barres.

La sortie de l'amplificateur 12 est reliée, d'une part, à un filtre passe-haut 15 suivi d'un adaptateur d'impédance 16, pour la voie 13, et d'autre part, d'un filtre passe-bas 17 suivi d'un amplificateur 18 et d'un adaptateur d'impédance 19, pour la voie 14. Les deux voies 13 et 14 sont reliées à la même porte 4 à fonction OU dont la sortie est reliée par l'intermédiaire d'un circuit 20 de mise en forme à la borne de sortie 5.

Comme dans le cas de circuit de la figure 1, les filtres passe-haut et passe-bas assurent la séparation des fonctions crayon optique et lecteur de codes à barres. Etant donné que l'amplificateur 12 est commun aux deux voies de traitement, et que les signaux de lecture d'un code à barres sont de niveau plus faible que ceux recueillis en fonction crayon optique, la voie 13 ne comporte pas d'amplificateur spécifique, alors que la voie 14 comporte l'amplificateur 18 compensant la différence d'énergie reçue par le photorécepteur 1 pour les deux fonctions du dispositif lecteur. Les adaptateurs d'impédance 16 et 19 assurent l'interface avec le circuit 4, et le circuit 16 permet de ne pas désadapter le filtre 15. Les circuits 16 et 19 peuvent former un tout fonctionnel avec le circuit 4, et le circuit 19 peut être omis si les caractéristiques de l'amplificateur 18 lui permettent d'assurer la fonction d'adaptation d'impédance.

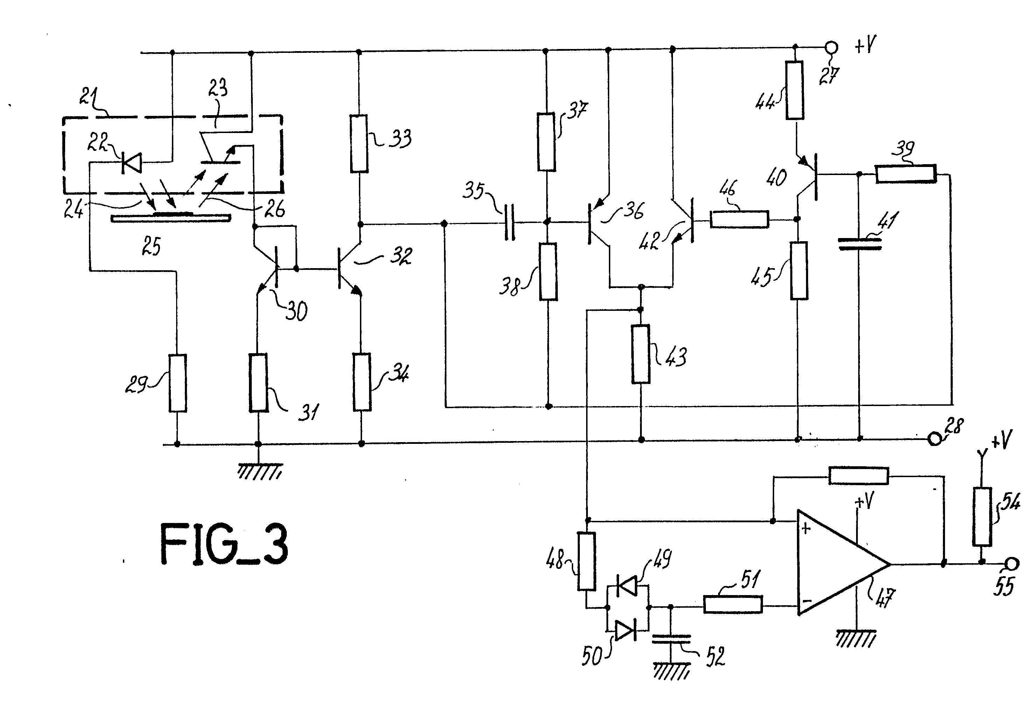

Le circuit de mise en forme 20, commun aux deux voies de traitement, fonctionne de façon spécifique pour chacune de ces deux voies, comme on l'expliquera ci-dessous pour le mode de réalisation préféré illustré par la figure 3.

Le transducteur 21 du lecteur optique représenté sur la figure 3 comporte une diode 22 émettrice dans l'infrarouge et un phototransistor 23 qui est, bien entendu, sensible aussi bien au rayonnement infrarouge qu'au rayonnement du spectre visible. Comme dans le cas du crayon optique classique, le transducteur 21 est disposé à l'extrémité d'un corps de crayon semblable au corps connu, de façon que le rayonnement infrarouge 24 émis par la diode 22 converge légèrement vers l'axe de ce crayon pour que le rayonnement réfléchi par une surface 25 comportant un code à barres 26 puisse atteindre la surface sensible du phototransistor 23. Bien entendu, lors de l'utilisation en crayon optique classique sur un écran de télévision, seul le rayonnement visible émis par le faisceau de . balayage de cet écran est pris en compte, le rayonnement infrarouge de la diode 22 n'étant pratiquement pas réfléchi par l'écran, et étant de toute façon très sensiblement inférieur au rayonnement émis par le faisceau de balayage de cet écran.

Le circuit électrique du lecteur optique de l'invention est avantageusement disposé dans le corps du crayon lecteur et comporte deux bornes d'alimentation en tension 27 et 28 reliées respectivement à une tension positive +V et à la masse. L'anode de la diode émettrice 22 est reliée à la borne 27, tandis que sa cathode est reliée via une résistance 29 à la borne 28. Selon une variante de réalisation, l'anode de la diode 22 peut être reliée à la borne 27 par l'intermédiaire d'un interrupteur (non représenté) normalement ouvert qui n'est fermé par l'utilisateur que lors de l'utilisation en lecteur de code à barres. Le collecteur du phototransistor 23 est relié à la borne 27, et son émetteur est relié au collecteur d'un transistor NPN 30 dont l'émetteur est relié via une résistance 31 à la borne 28. Le collecteur du transistor 30 est relié directement à sa base. La base du transistor 30 est directement reliée à la base d'un transistor NPN 32 dont le collecteur est relié via une résistance 33 à la borne 27, et dont l'émetteur est relié via une résistance 34 à la borne 28. Le collecteur du transistor 32 est relié par un condensateur 35 à la base d'un transistor PNP 36, cette base étant reliée par une résistance 37 à la borne 27 et par une résistance 38 à la borne 28. Le collecteur du transistor 32 est d'autre part relié par une résistance 39 à la base d'un transistor PNP 40, cette base étant reliée par un condensateur 41 à la borne 28.

L'émetteur du transistor 36 est directement relié à la borne 27, et son collecteur est directement relié à l'émetteur d'un transistor NPN 42 dont le collecteur est directement relié à la borne 27. Le collecteur du transistor 36 et l'émetteur du transistor 42 sont reliés par une résistance 43 à la borne 28. L'émetteur du transistor 40 est relié par une résistance 44 à la borne 27, tandis que son collecteur est relié d'une part par une résistance 45 à la borne 28, et d'autre part par une résistance 46 à la base du transistor 42.

Le collecteur du transistor 36 et l'émetteur du transistor 42 sont également reliés, d'une part directement à l'entrée non inverseuse d'un amplificateur opérationnel 47, et d'autre part par un circuit série comportant respectivement une résistance 48, un montage parallèle de diodes tête-bêche 49 et 50, et une résistance 51, à l'entrée inverseuse de l'amplificateur 47. Le point commun des diodes 49 et 50 et de la résistance 51 est relié à la masse par un condensateur 52. La sortie de l'amplificateur 47 est reliée par une résistance de contre-réaction 53 à son entrée non inverseuse, ainsi qu'à la source d'alimentation en tension +V, et par une résistance 54 à une borne 55 constituant la borne de sortie unique du lecteur optique de l'invention.

Les caractéristiques de l'amplificateur 12, qui est commun aux deux fonctions du lecteur optique, sont déterminées de la façon suivante : en fonction crayon optique, les signaux reçus par le photorécepteur sont situés dans le spectre visible, qui est un spectre à large bande. La sensibilité de l'amplificateur n'a pas besoin d'être élevée. Le photorécepteur a généralement une sensibilité spectrale dans le vert supérieure à celle dans le bleu. Le flux lumineux reçu de l'écran de télévision est variable (réglage de luminosité effectué par l'utilisateur), et la fréquence des signaux reçus par le photorécepteur est élevée, mais leur temps de montée n'est point négligeable.

En fonction lecteur de code à barres, le photorécepteur reçoit des signaux situés dans le spectre du proche infrarouge à bande étroite. L'amplificateur doit avoir une sensibilité élevée du fait que le flux lumineux reçu est faible, et enfin la fréquence des signaux reçus est basse.

Pour concilier ces impératifs, l'amplificateur 12 doit donc être à large bande, doit avoir une impédance d'entrée faible pour ne pas diminuer la rapidité du capteur, et doit avoir une large dynamique d'entrée pour amplifier convenablement aussi bien les signaux faibles que les signaux d'amplitude plus élevée.

Dans le mode de réalisation de la figure 3, l'amplificateur 12 comporte les transistors 30 et 32 en montage dit amplificateur à miroir de courant. Les signaux de sortie de cet amplificateur sont recueillis aux bornes de la résistance 33.

Le filtre passe-haut est constitué du condensateur 35, de faible valeur (pour ne laisser passer que les signaux de fréquence supérieure à 10 kHz environ), et des résistances 37 et 38 en parallèle avec l'impédance d'entrée du transistor 36. Le transistor 36 est polarisé de manière à être bloqué en l'absence de signal sur sa base, c'est-à-dire soit en l'absence de signal reçu par le photorécepteur 23, soit en fonction lecteur de code à barres. La résistance 43 ne reçoit donc alors aucun courant du transistor 36. En fonction crayon optique, le transistor 36 conduit à chaque impulsion correspondant au passage du spot sur le tube cathodique devant le photorécepteur 23, et fait passer un courant dans la résistance de charge 43.

La résistance 39 et le condensateur 41 forment un filtre passe-bas (à fréquence de coupure d'environ 5 à 10 kHz) qui permet de sélectionner la fonction lecture de code à barres. Le transistor 40 est polarisé de façon à être bloqué en l'absence de signal sur sa base, c'est-à-dire soit au repos (lorsque le lecteur optique n'est pas utilisé, mais alimenté en tension), soit en fonction crayon optique. Le blocage du transistor 40 entraîne le blocage du transistor 42, qui ne fait donc alors passer aucun courant dans la résistance 43. En mode de lecture de code à barres, le transistor 40 conduit, et son signal de sortie, amplifié en fonction du rapport des résistances 34 et 45, entraîne la conduction du transistor 42 qui fait alors passer un courant dans la résistance 43.

Le circuit comprenant les transistors 36 et 42, et la résistance 43 se comporte donc comme une porte à fonction OU dont la tension de sortie est disponible aux bornes de la résistance 43.

La valeur du condensateur 52 est choisie pour présenter à la fréquence d'utilisation du crayon optique pratiquement un court-circuit, et dans ce cas la tension de référence de l'amplificateur 47 est pratiquement nulle, la tension de décalage entre les deux entrées de cet amplificateur étant celle aux bornes de la résistance 48, qui peut être assez faible, et l'amplificateur 47, fonctionnant en comparateur, se déclenche sur le début du front de chaque impulsion produite aux bornes de la résistance 43. Ainsi, l'instant du déclenchement est pratiquement indépendant de la pente du front avant des signaux.

En fonctionnement lecteur de code à barres, le circuit comportant les diodes 49 et 50 et le condensateur 52 se comporte comme un détecteur de crête, et l'amplificateur 47 compare la tension aux bornes du condensateur 52 avec la tension apparaissant aux bornes de la résistance 43.

En résumé, le lecteur optique conforme à la présente invention a l'avantage de ne comporter qu'un capteur unique, et une sortie unique, la commutation entre les deux modes de fonctionnement étant automatique. En outre, il ne nécessite qu'une seule source d'alimentation en tension.

REVENDICATIONS

1. Lecteur optique fonctionnant en lecteur d'écran télévision et en lecteur de code à barres, caractérisé par le fait qu'il comporte, à la sortie d'un transducteur à photorécepteur unique (1), un circuit de traitement à deux voies, une voie pour la fonction crayon optique (2 ou 13), et une voie (3 ou 14) pour la fonction lecteur de code à barres, ces voies comportant respectivement un filtre passe-haut (7, 15) et un filtre passe-bas (10, 17), ces deux voies étant reliées à une porte OU (4) dont la sortie est reliée à la sortie du dispositif lecteur (5), ce circuit de traitement comportant en outre des amplificateurs (6, 9, 12, 18) et des circuits de mise en forme (8, 11, 20).

2. Lecteur optique selon la revendication 1, caractérisé par le fait que la première voie de traitement comporte un amplificateur (6) suivi d'un filtre passe-haut (7) et d'un circuit de mise en forme (8), et que la seconde voie comporte un amplificateur (9) suivi d'un filtre passe-bas (10) et d'un circuit de mise en forme (11).

3. Lecteur optique selon la revendication 1, caractérisé par le fait que le circuit de traitement comporte, en amont des deux voies de traitement, un amplificateur commun (12), et que la première voie de traitement comporte un filtre passe-haut (15) suivi d'un adaptateur d'impédance (16), tandis que la deuxième voie de traitement comporte un filtre passe-bas (17) suivi d'un amplificateur (18), un circuit de mise en forme commun (20) étant disposé en aval de la porte à fonction OU.

4. Lecteur optique selon l'une quelconque des revendications précédentes, caractérisé par le fait que le transducteur comporte une diode (22) émettant dans l'infrarouge et un photorécepteur tel qu'un phototransistor ou une photodiode (23).

5. Lecteur optique selon la revendication 3, caractérisé par le fait que ledit amplificateur commun (12) est un amplificateur du type à miroir de courant (30, 32).

6. Lecteur optique selon l'une quelconque des revendications 1 à 5, caractérisé par le fait que la porte à fonction OU comporte un transistor PNP (36) et un transistor NPN (42), l'émetteur du premier et le collecteur du second étant directement reliés à une borne (27) positive d'une source d'alimentation en tension, le collecteur du premier et l'émetteur du second étant reliés à la borne négative de la source d'alimentation en tension par une résistance de charge commune (43), les bases de ces deux transistors étant respectivement reliées à la sortie du filtre passe-haut (35, 37, 38) et à la sortie du filtre passe-bas (39, 41).

7. Lecteur optique selon la revendication 3, caractérisé par le fait que le circuit de mise en forme commun (20) comporte un amplificateur opérationnel (47) dont l'entrée non inverseuse est directement reliée à la sortie de la porte OU, et est reliée à l'entrée inverseuse par un circuit série comportant respectivement une résistance (48), deux diodes du montage anti-parallèle (49, 50), et une résistance (51), le point commun des deux diodes et de la dernière résistance citée étant relié par un condensateur (52) à la borne négative de la source d'alimentation en tension.

FIG_1

FIG_2

1/2

0156725

FIG_3

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl.4) |
|---|---|---|---|
| Y | EP-A-0 013 634 (ERITISH ROADCASTING) * En entier * | 1 | G 06 K 7/10 |
| A | | 3,4 | |
| Y | EP-A-0 062 777 (RECOGNITION EQUIP.) * Figures 1,2,5,6; page 3, ligne 1 - page 5, ligne 4, dernier alinéa - page 6 * | 1 | |
| A | | 2,7 | |

DOMAINES TECHNIQUES RECHERCHES (Int. Cl.4)

G 06 K

Le présent rapport de recherche a été établi pour toutes les revendications

| Lieu de la recherche | Date d'achevement de la recherche | Examinateur |
|---|---|---|
| LA HAYE | 07-06-1985 | FORLEN G.A. |

CATEGORIE DES DOCUMENTS CITES

X : particulierement pertinent à lui seul
Y : particulierement pertinent en combinaison avec un autre document de la même catégorie
A : arrière-plan technologique
O : divulgation non-ecrite
P : document intercalaire

T : theorie ou principe à la base de l'invention
E : document de brevet antérieur, mais publié à la date de depôt ou après cette date
D : cité dans la demande
L : cité pour d'autres raisons

& : membre de la même famille, document correspondant

OEB Form 1503 03 82